# EUROPEAN PATENT APPLICATION

(11) **EP 4 546 513 A1**
(43) Date of publication of application: **30.04.2025**
(21) Application number: 22947387.1
(22) Date of filing: 24.06.2022
(51) Int. Cl.: H01M 50/10, H01M 50/116, B32B 15/00, B32B 27/00

(54) **ENCAPSULATION FILM, ELECTROCHEMICAL DEVICE, AND ELECTRONIC DEVICE**

(71) Applicant: Ningde Amperex Technology Limited, Ningde, Fujian 352100 (CN)
(72) Inventor: ZHANG, Yuanjie, Ningde, Fujian 352100 (CN); HUANG, Zhiqi, Ningde, Fujian 352100 (CN); SU, Yisong, Ningde, Fujian 352100 (CN); LI, Baozhang, Ningde, Fujian 352100 (CN)
(74) Representative: Icosa
(86) International application number: PCT/CN2022/101114
(87) International publication number: WO 2023/245618

(57) **Abstract**

This application provides an encapsulation film, an electrochemical device, and an electronic device. The encapsulation film includes: an inner layer, where the inner layer includes a thermoplastic resin; an outer layer, where the outer layer includes a thermosetting resin; and a metal layer, where the metal layer is located between the inner layer and the outer layer, the metal layer includes at least one of stainless steel, titanium alloy, or nickel alloy, a thickness of the metal layer is 10 µm to 60 µm, and a tensile strength of the metal layer is 300 MPa to 2000 MPa; where a ratio of a thickness of the inner layer to the thickness of the metal layer is 0.6 to 3. The metal layer includes at least one of stainless steel, titanium alloy, or nickel alloy, the tensile strength of the metal layer is 300 MPa to 2000 MPa, and the ratio of the thickness of the inner layer to the thickness of the metal layer is 0.6 to 3. This can achieve a relatively high puncture resistance strength under a condition that the thickness of the encapsulation film is relatively thin, thereby enhancing the puncture resistance strength of the electrochemical device while reducing the adverse impact on the energy density of the electrochemical device.

## Description

### TECHNICAL FIELD

This application relates to the field of electrochemical energy storage, and specifically to an encapsulation film, an electrochemical device, and an electronic device.

### BACKGROUND

As electrochemical devices (for example, lithium-ion batteries) are widely applied in various electronic products, users have increasingly high requirements for the energy density and thinness of electrochemical devices. Encapsulation bags made of encapsulation film are essential components of lithium-ion batteries, and play a crucial role in isolating air and moisture and protecting the internal electrode assembly from damage. Aluminum-plastic films are currently the most common and mature encapsulation bags, and have been widely used due to their excellent encapsulation performance.

However, to ensure the safety of the electrode assembly and improve their resistance to external punctures, the aluminum-plastic film is usually made with a thicker metal layer and nylon layer to enhance puncture resistance strength. This design achieves a relatively high puncture resistance strength but also results in a loss of volumetric energy density for the lithium-ion battery. Therefore, further improvements in this regard are expected.

### SUMMARY

Some embodiments of this application provide an encapsulation film. The encapsulation film includes: an inner layer, where the inner layer includes a thermoplastic resin; an outer layer, where the outer layer includes a thermosetting resin; and a metal layer, where the metal layer is located between the inner layer and the outer layer, the metal layer includes at least one of stainless steel, titanium alloy, or nickel alloy, a thickness of the metal layer is 10 µm to 60 µm, and a tensile strength of the metal layer is 300 MPa to 2000 MPa; where a ratio of a thickness of the inner layer to the thickness of the metal layer is 0.6 to 3.

In some embodiments, the thickness of the metal layer is 30 µm to 40 µm. In some embodiments, the ratio of the thickness of the inner layer to the thickness of the metal layer is 0.6 to 2. In some embodiments, a thickness of the outer layer is 1 µm to 10 µm. In some embodiments, an elongation at break of the metal layer is 10% to 45%. In some embodiments, the thermoplastic resin includes at least one of polyethylene, polyvinyl chloride, polypropylene, or polystyrene. In some embodiments, the thermosetting resin includes at least one of polyurethane or polyacrylate. In some embodiments, the encapsulation film further includes an adhesive layer, where the adhesive layer is located between the inner layer and the metal layer. In some embodiments, the adhesive layer includes at least one of styrene-butadiene rubber, polyacrylic acid, polyacrylate, polyimide, polyamide-imide, polyvinylidene fluoride, polyvinylidene difluoride, polytetrafluoroethylene, water-based acrylic resin, or polyvinyl formal. In some embodiments, a thickness of the encapsulation film is 20 µm to 130 µm, and a puncture resistance strength of the encapsulation film is 30 N to 70 N.

An embodiment of this application further provides an electrochemical device, including the foregoing encapsulation film.

An embodiment of this application further provides an electronic device, including the foregoing electrochemical device.

In this application, the metal layer includes at least one of stainless steel, titanium alloy, or nickel alloy, the tensile strength of the metal layer is 300 MPa to 2000 MPa, and the ratio of the thickness of the inner layer to the thickness of the metal layer is 0.6 to 3. This can achieve a relatively high puncture resistance strength under a condition that the thickness of the encapsulation film is relatively thin, thereby enhancing the puncture resistance strength of the electrochemical device while reducing the adverse impact on the energy density of the electrochemical device.

### BRIEF DESCRIPTION OF DRAWINGS

FIG. 1 is a schematic cross-sectional view of an encapsulation film according to some embodiments of this application.
FIG. 2 is a schematic cross-sectional view of an encapsulation film according to some other embodiments of this application.

### DETAILED DESCRIPTION OF EMBODIMENTS

The following embodiments can help persons skilled in the art understand this application more comprehensively, but do not limit this application in any manner.

In some encapsulation films, a three-layer structure including a polyester layer, a metal layer, and a hot-melt resin layer is used, which reduces the use of intermediate binders, thereby reducing a total thickness of the encapsulation film and decreasing the energy density loss of the lithium-ion battery. However, to ensure that the encapsulation film has a relatively high puncture resistance strength, a thickness of the metal layer is required to be above 30 µm, and an overall thickness of the encapsulation film is below 140 µm, which still does not significantly decrease the energy density loss of the lithium-ion battery. In some other encapsulation films, a three-layer structure including a polyamide layer, a metal layer, and a hot-melt resin layer is used, where a thickness of the polyamide layer is required to be above 10 µm, a thickness of the metal layer is required to be above 36 µm, and a total thickness of the encapsulation film is above 83 µm. The total thickness of this designed encapsulation film is still relatively large, and to ensure it has a relatively high puncture resistance strength, the thickness of the metal layer is also strictly required, which still does not significantly decrease the energy density loss of the lithium-ion battery.

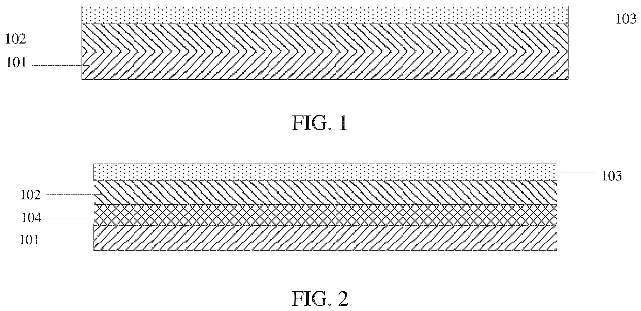

An embodiment of this application provides an encapsulation film for an electrochemical device. FIG. 1 is a schematic cross-sectional view of an encapsulation film according to some embodiments of this application. The encapsulation film includes an inner layer 101, a metal layer 102, and an outer layer 103, where the metal layer 102 is located between the inner layer 101 and the outer layer 103. In some embodiments, the inner layer 101, the metal layer 102, and the outer layer 103 may be bonded together through lamination, but this is merely exemplary and not intended to be limiting.

In some embodiments, the inner layer 101 includes a thermoplastic resin. In some embodiments, the outer layer 103 includes a thermosetting resin, so the outer layer 103 may be configured to suppress the swelling and deformation of an electrode assembly inside. In some embodiments, the metal layer 102 includes at least one of stainless steel, titanium alloy, or nickel alloy. These materials have relatively high strength, which helps reduce the thickness of the used metal layer 102. In some embodiments, the thickness of the metal layer 102 is 10 µm to 60 µm. If the thickness of the metal layer 102 is too small, the puncture resistance strength of the encapsulation film is small; and if the thickness of the metal layer 102 is too large, it does not help increase the energy density of the electrochemical device. In some embodiments, the thickness of the metal layer 102 is 30 µm to 40 µm. In some embodiments, the thickness of the metal layer 102 may be 10 µm, 20 µm, 30 µm, 40 µm, 50 µm, 60 µm, or other suitable values.

In some embodiments, the tensile strength of the metal layer 102 is 300 MPa to 2000 MPa. If the tensile strength of the metal layer 102 is too small, the strength of the metal layer 102 is low, resulting in insufficient puncture resistance strength of the encapsulation film; and if the tensile strength of the metal layer 102 is too large, the ductility of the metal layer 102 is poor, exhibiting a certain brittleness, which also causes a decrease in the puncture resistance strength of the encapsulation film. In some embodiments, the tensile strength of the metal layer 102 may be 300 MPa, 500 MPa, 800 MPa, 1000 MPa, 1200 MPa, 1500 MPa, 1800 MPa, 2000 MPa, or other suitable values.

In some embodiments, the ratio of the thickness of the inner layer 101 to the thickness of the metal layer 102 is 0.6 to 3. In some embodiments, the ratio of the thickness of the inner layer 101 to the thickness of the metal layer 102 is 0.6 to 2. If the ratio of the thickness of the inner layer 101 to the thickness of the metal layer 102 is too small, because a thickness of the thermoplastic resin layer is too thin, and the inner layer 101 also provides some mechanical strength, the overall puncture resistance strength of the encapsulation film is insufficient; and if the ratio of the thickness of the inner layer 101 to the thickness of the metal layer 102 is too large, a thickness of the thermoplastic resin layer is too large, resulting in a larger overall thickness of the encapsulation film, and although it has strong puncture resistance strength, it has an adverse impact on the energy density of the electrochemical device. In some embodiments, the ratio of the thickness of the inner layer 101 to the thickness of the metal layer 102 may be 0.6, 1, 1.2, 1.5, 2, 2.5, 3, or other suitable values.

Therefore, the metal layer includes at least one of stainless steel, titanium alloy, or nickel alloy, the tensile strength of the metal layer is 300 MPa to 2000 MPa, the thickness of the metal layer is 10 µm to 60 µm, and the ratio of the thickness of the inner layer to the thickness of the metal layer is 0.6 to 3. This can achieve a relatively high puncture resistance strength under a condition that the thickness of the encapsulation film is relatively thin, thereby enhancing the puncture resistance strength of the electrochemical device while reducing the adverse impact on the energy density of the electrochemical device. Under the condition that the design of other layers remains unchanged, the overall thickness of the encapsulation film of this application is significantly reduced, and the puncture resistance strength can be maintained or even improved compared with thicker aluminum-plastic films, thereby improving the overall volumetric energy density and safety performance of the lithium-ion battery.

In some embodiments, the thickness of the outer layer 103 is 1 µm to 10 µm. The outer layer 103 can protect the metal layer 102 and form good insulation performance with the external environment. If the thickness of the outer layer 103 is too small, the outer layer 103 is easily scratched, exposing the metal layer 102 and resulting in poor external insulation; and if the thickness of the outer layer 103 is too large, the overall volumetric energy density of the resulting electrochemical device is affected. In some embodiments, the thickness of the outer layer 103 may be 1 µm, 3 µm, 5 µm, 8 µm, 10 µm, or other suitable values.

In some embodiments, the elongation at break of the metal layer 102 is 10% to 45%. If the elongation at break of the metal layer 102 is too small, the ductility of the metal layer 102 is poor; and if the elongation at break of the metal layer 102 is too large, the structural stability of the encapsulation film is poor. In some embodiments, the elongation at break of the metal layer 102 may be 10%, 15%, 20%, 25%, 30%, 35%, 40%, 45%, 50%, or other suitable values.

In some embodiments, the thermoplastic resin includes at least one of polyethylene, polyvinyl chloride, polypropylene, or polystyrene. These thermoplastic resin materials allow the inner layer 101 to be heat-sealed and provide good sealing performance. In addition, the inner layer 101 may use any suitable material commonly used for the inner layer of encapsulation films in the field. It should be understood that when the encapsulation film is made into an encapsulation bag to accommodate an electrode assembly, the inner layer 101 is close to the electrode assembly, so it is called the inner layer, while the outer layer 103 is farther from the electrode assembly, so it is called the outer layer. In some embodiments, the thermosetting resin includes at least one of polyurethane or polyacrylate. In this application, a thinner polyurethane layer is used to replace the existing mature polyester or polyamide insulation layer of the aluminum-plastic film outer layer, ensuring good external insulation performance.

FIG. 2 is a schematic cross-sectional view of an encapsulation film according to some other embodiments of this application. In some embodiments, as shown in FIG. 2, the encapsulation film further includes an adhesive layer 104, where the adhesive layer 104 is located between the inner layer 101 and the metal layer 102. In some embodiments, the adhesive layer 104 is served as an adhesive between the inner layer 101 and the metal layer 102. In some embodiments, the adhesive layer 104 includes at least one of styrene-butadiene rubber, polyacrylic acid, polyacrylate, polyimide, polyamide-imide, polyvinylidene fluoride, polyvinylidene difluoride, polytetrafluoroethylene, water-based acrylic resin, or polyvinyl formal.

In some embodiments, the thickness of the encapsulation film is 20 µm to 130 µm. Using the encapsulation film in this thickness range not only can meet the requirements for puncture resistance strength of the encapsulation film, but also can reduce the adverse impact on the energy density of the electrochemical device. In some embodiments, the thickness of the encapsulation film is 20 µm, 30 µm, 40 µm, 50 µm, 60 µm, 70 µm, 80 µm, 90 µm, 100 µm, 110 µm, 120 µm, 130 µm, or other suitable values. In some embodiments, the puncture resistance strength of the encapsulation film is 30 N to 70 N. This not only can meet the requirements for puncture resistance strength of the encapsulation film, but also can avoid unnecessarily increasing the thickness of the encapsulation film.

In some embodiments, as described above, the electrode assembly is sealed by encapsulation bags formed by the encapsulation film, that is, the electrode assembly is located in an accommodating cavity formed by the encapsulation film. In some embodiments, the electrode assembly includes a positive electrode plate, a negative electrode plate, and a separator located between the positive electrode plate and the negative electrode plate.

In some embodiments, the positive electrode plate includes a positive electrode current collector and a positive electrode active material layer located on the positive electrode current collector. In some embodiments, the positive electrode active material layer is located on one side or two sides of the positive electrode current collector. In some embodiments, the positive electrode active material layer includes a positive electrode active material. In some embodiments, the positive electrode active material includes at least one of lithium cobaltate, lithium nickel cobalt manganese oxide, lithium nickel cobalt aluminate, or lithium manganate. In some embodiments, the positive electrode active material layer may further include a conductive agent. In some embodiments, the conductive agent in the positive electrode active material layer may include at least one of conductive carbon black, Ketjen black, laminated graphite, graphene, carbon nanotubes, or carbon fiber. In some embodiments, the positive electrode active material layer may further include a binder. The binder in the positive electrode active material layer may include at least one of carboxymethyl cellulose (CMC), polyacrylic acid, polyvinylpyrrolidone, polyaniline, polyimide, polyamideimide, polysiloxane, styrene-butadiene rubber, epoxy resin, polyester resin, polyurethane resin, or polyfluorene. In some embodiments, a mass ratio of the positive electrode active material, conductive agent, and binder in the positive electrode active material layer may be (80-99):(0.1-10):(0.1-10). In some embodiments, a thickness of the positive electrode active material layer may be 10 µm to 200 µm. It should be understood that the foregoing description is merely an example, and the positive electrode active material layer of the positive electrode may use any other appropriate materials, thicknesses, and mass ratios.

In some embodiments, the positive electrode current collector may be Al foil, or certainly may be other current collectors commonly used in the art. In some embodiments, a thickness of the positive electrode current collector may be 1 µm to 100 µm. In some embodiments, the positive electrode active material layer may be applied only on part of the positive electrode current collector.

In some embodiments, the negative electrode plate includes a negative electrode current collector and a negative electrode active material layer located on the negative electrode current collector. In some embodiments, the negative electrode active material layer is located on one side or two sides of the negative electrode current collector. In some embodiments, the negative electrode active material layer includes a negative electrode active material, where the negative electrode active material may include at least one of graphite, hard carbon, silicon, silicon monoxide, or organosilicon. In some embodiments, the negative electrode active material layer may further include a conductive agent and a binder. In some embodiments, the conductive agent in the negative electrode active material layer may include at least one of conductive carbon black, Ketjen black, laminated graphite, graphene, carbon nanotubes, or carbon fiber. In some embodiments, the binder in the negative electrode active material layer may include at least one of carboxymethyl cellulose (CMC), polyacrylic acid, polyvinylpyrrolidone, polyaniline, polyimide, polyamideimide, polysiloxane, styrene-butadiene rubber, epoxy resin, polyester resin, polyurethane resin, or polyfluorene. In some embodiments, a mass ratio of the negative electrode active material, the conductive agent, and the binder in the negative electrode active material layer may be (80-98):(0.1-10):(0.1-10). It should be understood that the foregoing description is only exemplary. Any other appropriate materials and mass ratios may be used. In some embodiments, the negative electrode current collector may be at least one of a copper foil current collector, a nickel foil current collector, or a carbon-based current collector.

In some embodiments, a separator includes at least one of polyethylene, polypropylene, polyvinylidene fluoride, polyethylene terephthalate, polyimide, or aramid. For example, polyethylene includes at least one of high-density polyethylene, low-density polyethylene, or ultra-high-molecular-weight polyethylene. Especially, polyethylene and polypropylene have a good effect on preventing short circuits and can enhance stability of a battery through a shutdown effect. In some embodiments, a thickness of the separator approximately ranges from 5 µm to 50 µm.

In some embodiments, the separator may further include a porous layer on its surface. The porous layer is disposed on at least one surface of a matrix of the separator, and the porous layer includes inorganic particles and a binder, where the inorganic particles are selected from at least one of aluminum oxide (Al₂O₃), silicon dioxide (SiO₂), magnesium oxide (MgO), titanium oxide (TiO₂), hafnium dioxide (HfO₂), stannic oxide (SnO₂), cerium dioxide (CeO₂), nickel oxide (NiO), zinc oxide (ZnO), calcium oxide (CaO), zirconium dioxide (ZrO₂), yttrium oxide (Y₂O₃), silicon carbide (SiC), boehmite, aluminum hydroxide, magnesium hydroxide, calcium hydroxide, or barium sulfate. In some embodiments, the separator has a pore diameter within a range of approximately 0.01 µm to 1 µm. The binder of the porous layer is selected from at least one of polyvinylidene fluoride, a vinylidene fluoridehexafluoropropylene copolymer, polyamide, polyacrylonitrile, polyacrylate, polyacrylic acid, polyacrylate, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, the electrode assembly of the electrochemical device is a wound electrode assembly, a laminated electrode assembly, or a folded electrode assembly. In some embodiments, the positive electrode plate and/or negative electrode plate of the electrochemical device may be a multi-layer structure formed through winding or lamination, or may be a single-layer structure formed by stacking a single positive electrode plate, a separator, and a single negative electrode plate.

In some embodiments, the electrochemical device includes a lithium-ion battery but this application is not limited thereto. In some embodiments, the electrochemical device may further include an electrolyte. The electrolyte may be one or more of gel electrolyte, solid electrolyte, and liquid electrolyte, and the liquid electrolyte includes a lithium salt and a non-aqueous solvent. The lithium salt is selected from one or more of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoro(oxalate)borate. For example, LiPF₆ is selected as the lithium salt because it has a high ionic conductivity and can improve cycling performance.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An example of the linear carbonate compound is diethyl carbonate (DEC), dimethyl carbonate (DMC), dipropyl carbonate (DPC), methyl propyl carbonate (MPC), ethylene propyl carbonate (EPC), ethyl methyl carbonate (MEC), or a combination thereof. An example of the cyclic carbonate compound is ethylene carbonate (EC), propyl carbonate (PC), butyl carbonate (BC), vinyl ethyl carbonate (VEC), or a combination thereof. An example of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An example of the carboxylate compound is methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, methyl formate, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

In some embodiments of this application, a lithium-ion battery is used as an example. A positive electrode, a separator, and a negative electrode are wound or stacked in sequence to form an electrode assembly, and the electrode assembly is then packaged in an aluminum-plastic film, followed by injection of an electrolyte, formation, and packaging, so that the lithium-ion battery is prepared. Then, a performance test is performed on the prepared lithium-ion battery.

Those skilled in the art will understand that the method for preparing the electrochemical device (for example, the lithium-ion battery) described above is only an example. Without departing from the content disclosed in this application, other methods commonly used in the art may be used.

Some embodiments of this application further provide an electronic device including the foregoing electrochemical device. The electronic device in some embodiments of this application is not particularly limited, and may be any known electronic device used in the prior art. In some embodiments, the electronic device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

Some specific examples and comparative examples are listed below to better illustrate this application. Lithium-ion batteries are used as examples.

### Comparative Example 1

Preparation of positive electrode plate: An aluminum layer was used as a positive electrode current collector. A positive electrode active material lithium cobaltate, a conductive agent conductive carbon black, and a binder polyvinylidene fluoride were dissolved at a weight ratio of 96:2.2:1.2 in an N-methylpyrrolidone (NMP) solution to prepare a positive electrode active material layer slurry. The positive electrode active material layer slurry was applied on the positive electrode current collector with a coating thickness of 80 µm to obtain a positive electrode active material layer, followed by drying, cold pressing, and cutting, to obtain a positive electrode. Compacted density of the positive electrode active material layer was 4.1 g/cm³.

Preparation of negative electrode plate: Artificial graphite, acetylene black, sodium carboxymethyl cellulose (CMC), and a binder styrene-butadiene rubber were dissolved at a weight ratio of 96:1:1.5:1.5 in deionized water to prepare a negative electrode slurry. A copper foil with a thickness of 10 µm was used as a negative electrode current collector. The negative electrode slurry was applied on the negative electrode current collector, with a coating thickness of 120 µm. After process of drying and cutting, a negative electrode plate was obtained.

Preparation of separator: Polyethylene (PE) with a thickness of 8 µm was used as a separator matrix. Each of two sides of the separator matrix was coated with a 2 µm alumina ceramic layer, and finally, each of the two sides coated with the ceramic layer was coated with 2.5 mg/cm² of binder polyvinylidene fluoride (PVDF), and dried.

Preparation of electrolyte solution: Under an atmosphere with a water content less than 10 ppm, LiPF₆ was added to a non-aqueous organic solvent (in which ethylene carbonate (EC), diethyl carbonate (DEC), propylene carbonate (PC), propyl propionate (PP), vinylene carbonate (VC) were mixed at a weight ratio of 20:30:20:28:2), where a concentration of LiPF₆ was 1.15 mol/L; and the solution was well mixed to obtain an electrolyte solution.

Preparation of lithium-ion battery: The positive electrode plate, the separator, and the negative electrode plate were stacked in sequence, so that the separator was disposed between the positive electrode plate and the negative electrode plate for separation, and the stack was wound to obtain an electrode assembly. The electrode assembly was put in an aluminum-plastic film, and was dehydrated at 80°C. Then, the aluminum-plastic film was injected with the foregoing electrolyte solution and then was sealed, followed by processes such as formation, degassing, and trimming to obtain a lithium-ion battery. The thickness of the aluminum-plastic film was 145 µm, and included polypropylene layer, high ductility aluminum foil layer, and nylon layer from the inside to the outside in sequence, where a thickness of the aluminum foil layer was 50 µm, a thickness of the nylon layer was 20 µm, and a thickness of the polypropylene layer was 75 µm. The lithium-ion battery had a capacity of about 3 Ah, charged at a constant current of 1C to 4.43 V, next charged at this constant voltage to 0.05C, after that left standing for 5 min, and then discharged at 0.7C to 3.0 V. This cycle of charge and discharge was repeated 600 times at room temperature.

### Example 1

According to Comparative Example 1, the difference lied in that: the encapsulation film included a polypropylene layer, stainless steel, and a polyurethane layer from the inside to the outside in sequence, where a thickness of the stainless steel was 30 µm, a tensile strength was 800 MPa, an elongation at break was 20%, a thickness of the polyurethane layer was 5 µm, and a thickness of the polypropylene layer was 45 µm; and the capacity and charge-discharge method of the lithium-ion battery were the same as those of Comparative Example 1.

In Examples 2 to 15 and Comparative Examples 2 to 7, the differences from Example 1 lied only in the encapsulation film, as detailed in the table below, and the capacity and charge-discharge method of the lithium-ion battery were the same as those of Example 1.

The following describes methods for testing the parameters of this application.

### Blunt puncture limit force test:

The lithium-ion battery was fully charged, and the fully charged lithium-ion battery was placed on a flat iron plate. A round blunt nail, with a diameter of φ6±0.1 mm and a length of 6.7 cm, having a hemispherical head was used, with the hemispherical head perpendicular to the geometric center of the sample. A hydraulic device was used to apply downward pressure on the round bar at a speed of 300 N/min, acting on the surface of the lithium-ion battery. The downward pressure and downward displacement were recorded. The point at which the downward displacement suddenly changed was recorded as the point at which the sample broke through; and the maximum force corresponding to this point was recorded as the limit force.

### Elongation at break test:

A punching machine was used to punch out samples of 15 mm×70 mm from the test sample. The sample was fixed to the test fixture of a Goteck tensile machine, the tensile strength of the sample was measured at a stretching speed of 5 mm/min, and the standard distance S0 between the two fixtures of the tensile machine was set to 30 mm. The displacement during stretching was recorded, and when the sample broke, the displacement of the extended test sample was recorded as the maximum elongation S1 of the test sample. The elongation at break of the test sample was calculated according to this formula: S = S1/S0 × 100%.

### Puncture resistance strength test:

A punching machine was used to punch out round samples with a diameter of 50 mm. The sample was fixed to the test stand. A puncture steel nail with a nail rod diameter of 1 mm and a hemispherical nail head radius of a 0.5 mm was used, and a downward pressure was applied at a speed of 50 mm/min to puncture the sample. During the puncture process, the maximum puncture resistance received by the steel nail was recorded as the puncture resistance strength of the sample.

### Tensile strength test:

The thermoplastic resin layer was manually peeled off from the test sample, next soaked in N-methylformamide (NMF) under an anhydrous inert atmosphere at room temperature for 3 h, and cleaned after the adhesion between the outer polymer insulation layer and the metal layer was weakened or even dissolved and fell off; after that, the metal layer was separated and extracted; and then the test was done. A punching machine was used to punch out samples of 15 mm × 70 mm from the test sample. The sample was fixed to the test fixture of a Goteck tensile machine, the tensile strength of the sample was measured at a stretching speed of 5 mm/min, and the initial distance between the two fixtures of the tensile machine was set to 30 mm. The strength and displacement during stretching were recorded, and the maximum tensile strength when the sample broke was recorded as the tensile strength of the sample.

### Volumetric energy density test:

The lithium-ion battery was charged at a constant current rate of 0.2C until the voltage reached 4.45 V, and then charged at this constant voltage to 0.025C. The lithium-ion battery was fully charged. Next, the fully charged lithium-ion battery was discharged at a constant current rate of 0.2C until the voltage dropped to 3.0 V. The total released capacity during discharge was recorded as C, the actual thickness H of the lithium-ion battery was measured, the actual volume V of the lithium-ion battery was calculated, and the energy density was calculated as C/V.

Table 1 shows the parameters and evaluation results of Examples 1 to 15 and Comparative Examples 1 to 7.

**Table 1**

| | Material of outer layer | Thickness of outer layer (µm) | Material of metal layer | Thickness of metal layer (µm) | Tensile strength of metal layer (MPa) | Elongation at break of metal layer (%) | Ratio of thickness of inner layer to thickness of metal layer | Puncture resistance strength of encapsulation film | Blunt puncture limit force (N) | Volumetric energy density (Wh/L) |
|---|---|---|---|---|---|---|---|---|---|---|
| Example 1 | Polyurethane | 5 | Stainless steel | 30 | 800 | 20% | 1.5 | 50 | 1900 | 667 |
| Example 2 | Polyurethane | 5 | Stainless steel | 10 | 500 | 15% | 1.5 | 35 | 1700 | 680 |
| Example 3 | Polyurethane | 5 | Stainless steel | 20 | 700 | 18% | 1.5 | 42 | 1810 | 673 |
| Example 4 | Polyurethane | 5 | Stainless steel | 40 | 1000 | 27% | 1.5 | 61 | 2130 | 660 |
| Example 5 | Polyurethane | 5 | Stainless steel | 50 | 1200 | 35% | 1.5 | 70 | 2300 | 654 |
| Example 6 | Polyurethane | 5 | Stainless steel | 30 | 300 | 40% | 1.5 | 40 | 1790 | 667 |
| Example 7 | Polyurethane | 5 | Stainless steel | 30 | 2000 | 10% | 1.5 | 60 | 2170 | 667 |
| Example 8 | Polyurethane | 5 | Stainless steel | 30 | 800 | 20% | 0.6 | 42 | 1830 | 674 |
| Example 9 | Polyurethane | 5 | Stainless steel | 30 | 800 | 20% | 2 | 52 | 1937 | 663 |
| Example 10 | Polyurethane | 5 | Stainless steel | 30 | 800 | 20% | 2.5 | 54 | 1978 | 659 |
| Example 11 | Polyurethane | 5 | Stainless steel | 30 | 800 | 20% | 3 | 57 | 2015 | 655 |
| Example 12 | Polyurethane | 5 | Titanium alloy | 30 | 710 | 14% | 1.5 | 50 | 2130 | 667 |
| Example 13 | Polyurethane | 5 | Nickel alloy | 30 | 930 | 12% | 1.5 | 50 | 2290 | 667 |
| Example 14 | Polyurethane | 1 | Stainless steel | 30 | 800 | 20% | 1.5 | 48 | 1880 | 668 |
| Example 15 | Polyurethane | 10 | Stainless steel | 30 | 800 | 20% | 1.5 | 52 | 1920 | 665 |
| Comparative Example 1 | Nylon | 20 | Aluminum foil | 50 | 300 | 35% | 1.5 | 30 | 1350 | 650 |
| Comparative Example 2 | Polyurethane | 5 | Stainless steel | 70 | 1500 | 50% | 1.5 | 110 | 3200 | 641 |
| Comparative Example 3 | Polyurethane | 5 | Stainless steel | 5 | 280 | 7% | 1.5 | 12 | 1180 | 683 |
| Comparative Example 4 | Polyurethane | 5 | Stainless steel | 30 | 100 | 60% | 1.5 | 18 | 1130 | 667 |
| Comparative Example 5 | Polyurethane | 5 | Stainless steel | 30 | 3000 | 5% | 1.5 | 25 | 1230 | 667 |
| Comparative Example 6 | Polyurethane | 5 | Stainless steel | 30 | 800 | 20% | 0.3 | 22 | 1280 | 676 |
| Comparative Example 7 | Polyurethane | 5 | Stainless steel | 30 | 800 | 20% | 4 | 63 | 2250 | 647 |

By comparing Examples 1 to 15 with Comparative Example 1, it can be learned that with the high-strength metal encapsulation film of this application used, the puncture resistance strength of the encapsulation film is greater than that of a conventional aluminum-plastic film with a larger thickness, the blunt puncture limit force of the lithium-ion battery using the high-strength metal encapsulation film is much greater than that of a lithium-ion battery with a thicker conventional aluminum-plastic film, and due to the reduction in the thickness of the encapsulation film, the energy density of the lithium-ion battery is also significantly increased.

By comparing Examples 1 to 5 with Comparative Examples 2 and 3, it can be learned that when the thickness of the metal layer of the high-strength metal encapsulation film is 10 µm to 60 µm, the encapsulation film shows the best improvement effect. When the thickness of the metal layer is greater than 60 µm, the encapsulation film has a larger thickness, and although it has high puncture resistance strength, it has a significant adverse effect on the volumetric energy density of the lithium-ion battery. When the thickness of the metal layer is less than 10 µm, the encapsulation film is thinner, and the puncture resistance strength is low, which is insufficient to improve the resistance of the lithium-ion battery to external punctures.

By comparing Examples 1, 6, and 7 with Comparative Examples 4 and 5, it can be learned that when the tensile strength of the metal layer of the high-strength metal encapsulation film is 300 MPa to 2000 MPa, the encapsulation film shows the best improvement effect. When the tensile strength of the metal layer is greater than 2000 MPa, the metal layer, due to its ultra-high strength, has a significantly worsened ductility, exhibiting a certain brittleness, and therefore the puncture resistance strength decreases and cannot meet the requirements. When the tensile strength of the metal layer is less than 300 MPa, the metal layer, due to its ultra-low strength, does not have sufficient strength to resist external punctures, resulting in insufficient puncture resistance strength.

By comparing Example 1 and Examples 8 to 11 with Comparative Examples 6 and 7, it can be learned that when the ratio of the thickness of the thermoplastic resin layer (that is, the inner layer) to the thickness of the metal layer is 0.6 to 3, the encapsulation film shows the best improvement effect. When this ratio is greater than 3, due to the larger thickness of the inner layer, the overall thickness of the encapsulation film is larger, and although it has high puncture resistance strength, it adversely affects the volumetric energy density of the lithium-ion battery. When this ratio is less than 0.6, due to the thin thickness of the inner layer, and since the inner layer also provides some mechanical strength, the overall puncture resistance strength of the encapsulation film is insufficient.

By comparing Example 1 and Examples 12 and 13, it can be learned that using titanium alloy or nickel alloy as the metal layer can achieve a similar improvement effect as stainless steel.

By comparing Example 1 and Examples 14 and 15, it can be learned that as the thickness of the outer layer increases, the puncture resistance strength and blunt puncture limit force can be improved to a certain extent, but the volumetric energy density will decrease.

The foregoing descriptions are merely preferred examples of this application and explanations of the technical principles used. Persons skilled in the art should understand that the related scope disclosed in this application is not limited to the technical solutions formed by a specific combination of the foregoing technical characteristics, and should also cover other technical solutions formed by any combination of the foregoing technical characteristics or their equivalent characteristics. For example, the technical solution formed by replacement between the foregoing features and technical features having similar functions disclosed in this application.

## Claims

1. An encapsulation film, comprising:
an inner layer, wherein the inner layer comprises a thermoplastic resin;
an outer layer, wherein the outer layer comprises a thermosetting resin; and
a metal layer, wherein the metal layer is located between the inner layer and the outer layer, the metal layer comprises at least one of stainless steel, titanium alloy, or nickel alloy, a thickness of the metal layer is 10 µm to 60 µm, and a tensile strength of the metal layer is 300 MPa to 2000 MPa; wherein
a ratio of a thickness of the inner layer to the thickness of the metal layer is 0.6 to 3.

2. The encapsulation film according to claim 1, wherein the thickness of the metal layer is 30 µm to 40 µm.

3. The encapsulation film according to claim 1, wherein the ratio of the thickness of the inner layer to the thickness of the metal layer is 0.6 to 2.

4. The encapsulation film according to claim 1, wherein a thickness of the outer layer is 1 µm to 10 µm.

5. The encapsulation film according to claim 1, wherein an elongation at break of the metal layer is 10% to 45%.

6. The encapsulation film according to claim 1, wherein the thermoplastic resin comprises at least one of polyethylene, polyvinyl chloride, polypropylene, or polystyrene.

7. The encapsulation film according to claim 1, wherein the thermosetting resin comprises at least one of polyurethane or polyacrylate.

8. The encapsulation film according to claim 1, further comprising an adhesive layer, wherein the adhesive layer is located between the inner layer and the metal layer.

9. The encapsulation film according to claim 8, wherein the adhesive layer comprises at least one of styrene-butadiene rubber, polyacrylic acid, polyacrylate, polyimide, polyamide-imide, polyvinylidene fluoride, polyvinylidene difluoride, polytetrafluoroethylene, water-based acrylic resin, or polyvinyl formal.

10. The encapsulation film according to claim 1, wherein a thickness of the encapsulation film is 20 µm to 130 µm, and a puncture resistance strength of the encapsulation film is 30 N to 70 N.

11. An electrochemical device, comprising the encapsulation film according to any one of claims 1 to 10.

12. An electronic device, comprising the electrochemical device according to claim 11.
